# EUROPÄISCHE PATENTANMELDUNG

(11) **EP 2 570 399 A1**
(43) Veröffentlichungstag der Anmeldung: **20.03.2013**
(21) Anmeldenummer: 12184044.1
(22) Anmeldetag: 12.09.2012
(51) Int. Cl.: C04B 35/185, C04B 35/626, B24C 11/00, C01F 7/02, C09K 3/14, B24C 1/00

(54) **Verfahren zum Strahlen von Materialoberflächen mit kugelförmigen keramischen Teilchen als Strahlmittel**

(30) Priorität: 15.09.2011 EP 11181484
(71) Anmelder: GTP-Schäfer Giesstechnische Produkte GmbH, 41515 Grevenbroich (DE)
(72) Erfinder: Schäfer, Jörg, 50937 Köln (DE)
(74) Vertreter: Müller, Karl-Ernst

(57) **Zusammenfassung**

Ein Verfahren zum Strahlen von Materialoberflächen, bei welchem als Strahlmittel aus einer nichtsilikogenen mineralischen Zusammensetzung bestehende kugelförmige keramische Teilchen mit einer mittleren Teilchengröße von 0,001 mm bis 2 mm eingesetzt werden, wobei die Zusammensetzung der keramischen Teilchen einen Anteil von 65 - 85 Gew.-% Al₂O₃ aufweist und das in der Zusammensetzung enthaltene Al₂O₃ kristallographisch überwiegend in Form von Mullit (3Al₂O₃ x 2SiO₂) vorliegt und der Rest der Zusammensetzung aus einem in vollständig kristallographisch gebundener Form vorliegenden Anteil an SiO₂ sowie aus Anteilen von Fe₂O₃ und TiO₂ sowie Spurenelementen besteht.

## Beschreibung

Die Erfindung betrifft ein Verfahren zum Strahlen von Materialoberflächen.

Soweit das vorgenannte Verfahren auf dem Einsatz von geeigneten Strahlmitteln beruht, darf bei den eingesetzten Strahlmitteln aufgrund von arbeitsschutzrechtlichen Vorschriften der Gehalt an freier kristalliner Kieselsäure, insbesondere in Form von SiO₂, im Strahlmittel nicht mehr als 2 Gew.-% betragen, da anderenfalls besondere Schutzmaßnahmen für den Umgang mit einem derartigen Strahlmittel durchgeführt werden müssen. Daher besteht ein Bedarf an Strahlmitteln, die die vorstehende Vorschrift einhalten, jedoch eine ausreichende Dichte und Stabilität aufweisen und gleichzeitig zu möglichst geringen Einsatzkosten verfügbar sind.

Aus der DE 20 2009 012 931 U1 ist es bekannt, im Rahmen eines Verfahrens zum Strahlen von Materialoberflächen als Strahlmittel neben Glasbruch, Glasperlen oder Glasfasern auch Keramikkugeln einzusetzen. Derartige Keramikkugeln in Form von Korundteilchen auf der Basis von geschmolzenem Aluminiumoxid sind in der DE 10 2005 045 180 B4 beschrieben. Mit derartigen Korundkugeln ist jedoch noch der Nachteil verbunden, dass diese ein vergleichsweise großes Porenvolumen aufweisen, weswegen das in der DE 10 2005 045 180 B4 beschriebene Verfahren darauf abzielt, Aluminiumoxidkugeln mit einer entsprechenden Dichte zur Verfügung zu stellen. Zusätzlich ist jedoch auch der Herstellungsprozess für entsprechend dichte Aluminiumoxidkugeln aufwendig und mit entsprechenden Kosten verbunden.

Der Erfindung liegt daher die Aufgabe zugrunde, ein verbessertes Verfahren zum Strahlen von Materialoberflächen zur Verfügung zu stellen.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht hierzu im Einzelnen ein Verfahren vor, bei welchem als Strahlmittel aus einer nichtsilikogenen mineralischen Zusammensetzung bestehende kugelförmige keramische Teilchen mit einer mittleren Teilchengröße von 0,001 mm bis 2 mm eingesetzt werden, wobei die Zusammensetzung der keramischen Teilchen einen Anteil von 65 - 85 Gew.-% Al₂O₃ aufweist und das in der Zusammensetzung enthaltene Al₂O₃ kristallographisch überwiegend in Form von Mullit (3Al₂O₃ x 2SiO₂) vorliegt und der Rest der Zusammensetzung aus einem in vollständig kristallographisch gebundener Form vorliegenden Anteil an SiO₂ sowie aus Anteilen von Fe₂O₃ und TiO₂ sowie Spurenelementen besteht.

Mit der Erfindung ist einerseits der Vorteil verbunden, dass der Strahlerfolg des erfindungsgemäßen Verfahrens dadurch verbessert ist, dass die keramischen Strahlmittelteilchen neben ihrer kugeligen Form eine ausreichende Dichte und Stabilität aufweisen und dadurch in besonderer Weise für den Einsatz als Strahlmittel geeignet sind. Die Härte bzw. die Beständigkeit der keramischen Teilchen rührt dabei insbesondere von der Kristallstruktur des in der eingesetzten Zusammensetzung enthaltenen Mullits her, der eine hohe Widerstandsfähigkeit gegenüber mechanischer Beanspruchung aufweist. Diese Widerstandsfähigkeit wird durch die kugelige Teilchenform unterstützt und verstärkt.

Der Rohstoff Mullit ist zu einem anderen technischen Einsatzzweck beispielsweise in der US 2004/014,7388 A1 angesprochen.

Als besonderer Vorteil des erfindungsgemäßen Verfahrens ist weiterhin zu nennen, dass der zur Verbesserung der Eigenschaften des Strahlmittels in dem Strahlmittel gewünschte Anteil von SiO₂ ausschließlich in einer in der Kristallstruktur des eingesetzten Rohstoffes gebundenen Form vorliegt, so dass bei Durchführung des Verfahrens lediglich ein Anteil von deutlich < 1 Gew.-% an SiO₂ in dem Strahlmittel herstellungsbedingt oder aufgrund von entsprechenden Verunreinigungen feststellbar ist.

Schließlich ist mit der Erfindung der Vorteil verbunden, dass das Strahlmittel einfach und zu günstigen Kosten herzustellen ist. Die für die Herstellung des Strahlmittels heranzuziehende Zusammensetzung liegt beispielsweise als natürlicher Rohstoff mit einem entsprechend hohen Anteil an Mullitkristallen und weiteren, entsprechende Anteile an Eisen und/oder Titan aufweisenden Mischkristallstrukturen vor. Zur Herstellung des erfindungsgemäßen Strahlmittels wird dieser Rohstoff beispielsweise in einem Lichtbogenofen aufgeschmolzen und unter Einsatz von beispielsweise Pressluft in geeigneter Form zerstäubt, so dass die Kugelform der Teilchen mit der angegebenen mittleren Teilchengrößen von 0,001 mm - 2 mm entsteht.

Es ist aber auch möglich, die kugelförmigen keramischen Teilchen auf der Basis einer synthetisch erzeugten Zusammensetzung der genannten Art herzustellen.

Die in der vorstehenden Beschreibung, den Patentansprüchen und der Zusammenfassung offenbarten Merkmale des Gegenstandes dieser Unterlagen können einzeln als auch in beliebigen Kombinationen untereinander für die Verwirklichung der Erfindung in ihrer verschiedenen Ausführungsformen wesentlich sein.

## Patentansprüche

1. Verfahren zum Strahlen von Materialoberflächen, bei welchem als Strahlmittel aus einer nichtsilikogenen mineralischen Zusammensetzung bestehende kugelförmige keramische Teilchen mit einer mittleren Teilchengröße von 0,001 mm bis 2 mm eingesetzt werden, wobei die Zusammensetzung der keramischen Teilchen einen Anteil von 65 - 85 Gew.-% Al₂O₃ aufweist und das in der Zusammensetzung enthaltene Al₂O₃ kristallographisch überwiegend in Form von Mullit (3Al₂O₃ x 2SiO₂) vorliegt und der Rest der Zusammensetzung aus einem in vollständig kristallographisch gebundener Form vorliegenden Anteil an SiO₂ sowie aus Anteilen von Fe₂O₃ und TiO₂ sowie Spurenelementen besteht.

2. Verfahren nach Anspruch 1, bei welchem das Strahlmittel folgende Zusammensetzung aufweist:
75 - 80 Gew.-% Al₂O₃
7 - 12 Gew.-% SiO₂
2 - 6 Gewi.-% Fe₂O₃
2 - 6 Gew.-% TiO₂
wobei der Rest Spurenelemente und herstellungsbedingte Beimengungen sind.

3. Verfahren nach Anspruch 1 oder 2, bei welchem die kugelförmigen keramischen Teilchen durch Aufschmelzen und durch Verblasen oder Verdüsen des in natürlicher Form vorliegenden Rohstoffes in die vorgegebene Kugelform gebildet sind.
